# EUROPEAN PATENT APPLICATION

(11) **EP 0 715 058 A1**
(43) Date of publication of application: **05.06.1996**
(21) Application number: 95308443.1
(22) Date of filing: 24.11.1995
(51) Int. Cl.: F01K 23/06

(54) **A method for improving the efficiency of a combined cycle power plant process**

(30) Priority: 01.12.1994 FI 945678
(71) Applicant: Wartsila Diesel International Ltd. OY, 00530 Helsinki (FI)
(72) Inventor: Vuorinen, Asko, FIN-02360 Espoo (FI)
(74) Representative: Newby, Martin John

(57) **Abstract**

A method is disclosed for improving the efficiency of producing electricity and/or heat in a combined cycle power plant process, in which the exhaust gases of at least one supercharged combustion engine (1) are used in a gas turbine process (2b) from which they are further fed into a steam production process. The mechanical energy provided by the combustion engine (1) is arranged to operate an electric generator (4) for the production of electricity. The exhaust gases are subjected to supplementary firing (5) before being fed into a turbocharger (2b). As a result the temperature of the exhaust gases is substantially increased to make the operation of the turbocharger (24) more effective so that is serves as a gas turbine for producing electricity and to provide an increase in the temperature of the exhaust gases fed into the steam production process so as to enable the provision of high temperature steam in the steam production process.

## Description

This invention relates to a method for improving the efficiency of producing electricity and/or heat in a combined cycle power plant process, the method being in accordance with the preamble of claim 1. In this specification the term "combustion engine" is intended to comprise either a diesel engine or an otto cycle engine.

The simplest way of producing electricity with a combustion engine is to arrange for the combustion engine to directly operate an electric generator. In a conventional combustion engine power plant it is possible to produce electricity and/or heat energy by functionally connecting to the combustion engine first a gas turbine, which utilises the exhaust gases from the combustion engine, and then a steam turbine which utilises steam generated by making use of the hot exhaust gases after they have left the gas turbine. Both the gas turbine and the steam turbine may be arranged so as also to produce electricity. In this kind of diesel combined cycle process, which utilises the turbo charger of the combustion engine as a gas turbine, the exhaust gases leaving the turbo charger typically have a temperature of about 320°C. In this case the efficiency of the steam turbine process is relatively low, because the pressure of the live steam is about 10 bar. By means of this conventional combined cycle process, however, the efficiency for electricity production can be increased to the value of 46%, i.e. an increase of about 7% compared with the efficiency of 43% for a conventional diesel power plant.

It is also known with diesel engine to use afterburning, by additional firing, of the exhaust gases. Furthermore, additional firing arranged after a turbo charger has also been utilised to some extent in a combined cycle process. However, this has not resulted in an increase in efficiency of electricity production because of the additional fuel that is consumed. On the other hand the temperature of live steam can be increased in this way to fulfil the needs of industrial processes.

An aim of the invention is to improve a combustion engine combined cycle power plant process so that it is more readily applicable to the production of both electricity and heat energy. A particular aim is to increase the efficiency for electricity production and, thus, to increase the profitability of such a power plant.

The aims of the invention can be met according to the present invention by a method as claimed in the ensuing claim 1. In such a method the efficiency of electricity production in a diesel combined cycle process can be substantially increased. At the same time high temperature steam can also be produced for the needs of industrial processes thereby increasing overall efficiency.

It is also possible by the supplementary firing effectively to decrease the content of nitrogen oxides (NOx) in the exhaust gases. This is because it is known from conventional burning processes that by employing phased burning it is possible to decrease nitrogen oxides by from 50-70%. Supplementary firing also makes it possible to increase the charging pressure for the combustion engine resulting in increased power for the engine. Increasing the charging pressure should, however, be taken into account also when desiging the engine, for example in the dimensions and in material selection.

By means of the supplementary firing the temperature of the exhaust gases is increased so as to be in the range of from 600-1300°C, preferably in the range of from 700-1300°C, before the exhaust gases are fed into the gas turbine. Accordingly the turbine of the turbocharger can serve as an actual gas turbine and can also be arranged to generate electricity resulting directly in increased efficiency.

If, in connection with the supplementary firing, the temperature of the exhaust gases is increased to a sufficiently high range for complete burning so as to burn the remaining oxygen as completely as possible, it is possible to utilise a 3-way catalytic converter for the depuration of the exhaust gases. Thus it is possible to functionally secure catalytic removal of nitrogen oxides, because the temperature of the exhaust gases, after utilisation thereof, can be arranged to fall so as to be within the ideal reaction temperature range for the purpose of about from 320-370°C.

After passing through the gas turbine, the temperature of the exhaust gases to be fed into the steam generating unit is at least about 500°C, preferably in the range of from 500-700°C. Due to the supplementary firing, the exhaust gases, even after passing through the turbo charger, are so hot that it is possible to generate in a steam production process high temperature steam having a temperature of at least about 500°C and a pressure of about 70 bar. Thereafter the steam from the steam production process is with advantage fed into a steam turbine for the production of electricity. Thus, by making use of the steam, the efficiency of the turbine process can substantially be increased.

Natural gas is advantageously used as the main fuel in the combustion engine. Because the high temperatures of exhaust gases may cause hot corrosion or excessive dirt in the turbine blades when heavy fuel is used, such problems resulting possibly from burning of heavy fuel can be avoided. On the other hand accumulation of dirt may be prevented, for instance, by improving the washing system for the turbine blades.

Embodiments of the invention will now be described in more detail, by way of example only, with particular reference to the accompanying drawing, the sole figure of which schematically shows a diesel combined cycle power plant process in accordance with the invention.

In the power plant shown in the drawing, a combustion engine 1 is provided with a turbo charger 2 comprising a compressor 2a, which feeds compressed air through intermediate coolers 3 into the combustion engine, and a gas turbine 2b which is operated by exhaust gases from the combustion engine 1. An electric generator 4 connected to the combustion engine directly transforms mechanical energy generated by the combustion engine into electricity.

Before the exhaust gases from the combustion engine 1 are supplied to the gas turbine 2b, they are fed into a burner 5 for supplementary firing. In the burner 5, the temperature of the exhaust gases is increased so as typically to be in the range of from 700-1300°C. As a result of this supplementary firing, the turbine 2b of the turbo charger 2 serves as an actual gas turbine to which an electric generator 6 can be connected for generating more electricity.

After exiting the turbo charger, the exhaust gases are still hot, typically having a temperature of from about 500-700°C, and can be used to generate high temperature steam, in a way known as such, in a steam generating unit 7. From the steam generating unit 7, high temperature and high pressure steam is led into a steam turbine 9 included in a steam generating circuit 8. By connecting an electric generator 10 to the steam turbine 9 still more electricity can be produced.

After exiting the steam turbine 9, the steam is passed through a condenser 11, a condenser pump 12 and a water feeding pump 13 before being fed into a preheating unit 14 which, with advantage, may make use, for example, of cooling water from the combustion engine. After this the water is led through a water feeding container 15 and a condenser pump 16 into the steam generating unit 7 for recirculation.

By way of example, if the engine 1 is a Wärtsilä Vasa 46 (version 18V46) diesel engine, the electricity obtained from the generator 4 is calculated to be about 15.8 MW. If the temperature of the exhaust gases is increased by the supplementary firing to about 700°C, it is possible to generate about a further 2.4 MW of electricity by means of the gas turbine 2b and the generator 6. In this case the temperature of the exhaust gases after the turbo charger is about 527°C and the live steam from the steam generating unit 7 typically has a temperature of about 500°C and a pressure of about 70 bar. As a result the steam turbine 9 and the generator 10 can generate about a further 3.6 MW of electricity. Thus, the total production of electricity is almost 22 MW. When the estimated fuel consumption is 35.6 MW for the diesel engine and 6.8 MW for the supplementary firing, i.e. in all 42.4 MW, the gross electrical efficiency is above 51%. Since the estimated consumption or efficiency loss of the power plant itself is about 3%, the net efficiency is about 50%. Hence, by means of the advanced diesel combined cycle process in accordance with the invention it is possible substantially to increase the electrical efficiency in comparison with a conventional diesel combined cycle process and at the same time to produce more electricity.

If an aim is only to produce electricity using a power plant operating on natural gas, the electrical efficiency is of vital importance from the view point of profitability.

Another possible application is a counter pressure power plant because by means of supplementary firing, it is possible to simultaneously produce high pressure steam for industrial processes either directly or through a steam turbine. The characteristics of the steam can be selected to correspond with those required by the process, whereby the turbine can be either a so-called counter pressure turbine with a counter pressure of from about 1-10 bar or a heating turbine with a counter pressure of about 1.2 bar.

As a rule a power plant is based on a plurality of combustion engines with the plant typically, for instance, having only one steam turbine. It is also possible to have the supplementary firing associated with one larger gas turbine, whereby the turbo chargers operate by means of electric motors or mechanical couplings in direct connection with the combustion engines. In this case a larger gas turbine or a steam turbine may have better efficiency so the total efficiency may respectively be increased in comparison with the calculation above. A larger steam turbine can also be provided with an intermediate superheater or a boiler operating at two pressures, for instance 70 bar and 6 bar, whereby the efficiency can also be improved.

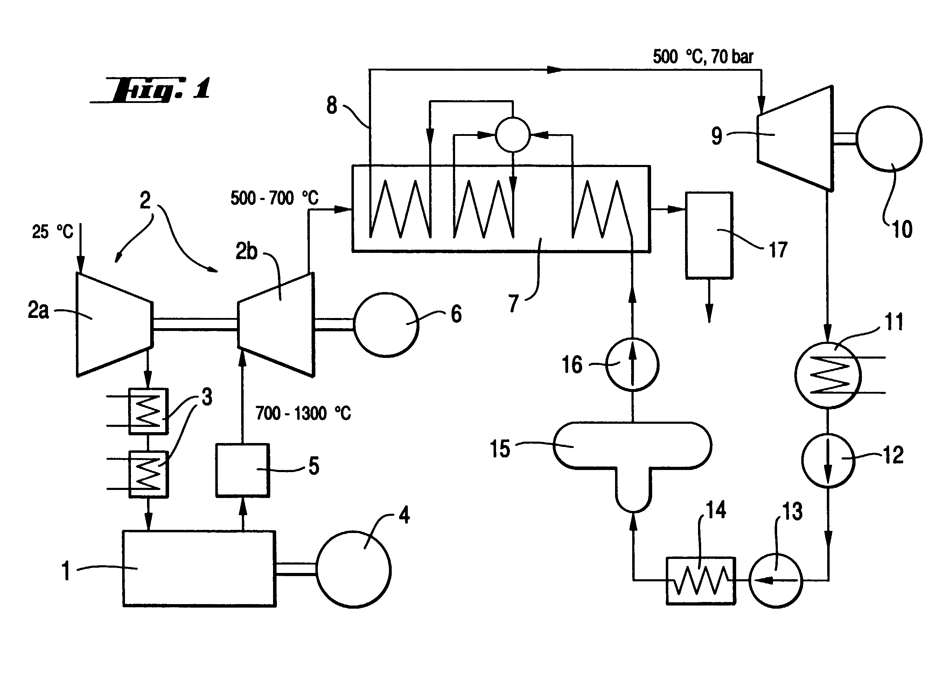

If catalytic depuration of the exhaust gases is necessary in order to decrease the content of nitrogen oxides, a catalytic converter 17 can, with advantage, be installed after the steam generating unit 7 in the embodiment of Figure 1.

The invention is not to be considered as being limited to the embodiment illustrated since several variations thereof are feasible including variations which have features equivalent to, but not necessarily literally within the meaning of, features in any of the following claims.

## Claims

1. A method for improving the efficiency of producing electricity and/or heat in a combined cycle power plant process, in which exhaust gases of at least one supercharged combustion engine (1) are used in a gas turbine process, from which they are further fed into a steam production process, characterised in that the mechanical energy provided by the combustion engine (1) is used, in a way known as such, to operate an electric generator (4) for the production of electricity and in that the exhaust gases from the combustion engine (1), before being fed to a turbocharger (2b), are subjected to a supplementary firing to substantially increase their temperature for making the operation of the turbocharger (2b) more effective, so that it serves as a gas turbine for producing electricity, and for providing an increase in the temperature of the exhaust gases that are fed into the steam production process enabling the provision of high temperature steam in the steam production process.

2. A method according to claim 1, characterised in that the temperature of the exhaust gases is increased by means of said supplementary firing so as to be in the range of from 600-1300°C, preferably in the range of from 700-1300°C, before the exhaust gases are fed into the gas turbine (2b).

3. A method according to claim 1 or 2, characterised in that the temperature of the exhaust gases is increased by the supplementary firing to be in a range required for complete burning for burning the remaining oxygen as completely as possible, after which the exhaust gases are depurated in a 3-way catalytic converter.

4. A method according to any one of the preceding claims, characterised in that after passing through the gas turbine (2b), the temperature of the exhaust gases to be fed into steam production is at least about 500°C, preferably from about 500-700°C.

5. A method according to any one of the preceding claims, characterised in that the steam generated in the steam production process has a temperature of at least about 500°C and a pressure of about 70 bar.

6. A method according to claim 5, characterised in that the steam from the steam production process is fed into a steam turbine (9) for the production of electricity.

7. A method according to any one of the preceding claims, characterised in that the or each combustion engine (1) is a diesel engine and the main fuel to be used is natural gas.
